# FASCICULE DE BREVET EUROPEEN

(11) **EP 3 433 414 B1**
(45) Date de publication et mention de la délivrance du brevet: **18.08.2021**
(21) Numéro de dépôt: 17712517.6
(22) Date de dépôt: 24.03.2017
(51) Int. Cl.: D06M 15/59, B60C 9/00, D06M 15/263, D06M 15/227, C08J 5/12, D07B 1/06, D02G 3/48, C08G 81/02, C09D 5/08

(54) **PRODUIT RENFORCÉ COMPRENANT UN RENFORT COMPOSITE AUTO-ADHÉRENT COMPRENANT UN COPOLYMÈRE À BLOCS**
VERSTÄRKTES PRODUKT MIT EINER SELBSTKLEBENDEN VERBUNDVERSTÄRKUNG MIT EINEM BLOCKCOPOLYMER
REINFORCED PRODUCT COMPRISING A SELF-ADHESIVE COMPOSITE REINFORCEMENT CONTAINING A BLOCK COPOLYMER

(30) Priorité: 24.03.2016 FR 1652589
(43) Date de publication de la demande: 30.01.2019
(73) Titulaire: Compagnie Générale des Etablissements Michelin, 63000 Clermont-Ferrand (FR)
(72) Inventeur: RIGO, Sébastien, 63040 Clermont-Ferrand Cedex 09 (FR); PINEAU, Quentin, 27000 Evreux (FR)
(74) Mandataire: Louret, Sylvain
(86) Numéro de dépôt international: PCT/EP2017/057119
(87) Numéro de publication internationale: WO 2017/162875

(56) Documents cités:
- EP-A1- 0 193 746
- WO-A1-2016/046463
- US-A1- 2012 000 541

## Description

La présente invention se rapporte à un produit renforcé utilisable notamment pour le renforcement d'un article fini en caoutchouc, comportant un ou plusieurs fils de renforcement, le ou lesdits fils étant recouverts d'une gaine comprenant une composition de gainage comprenant un ou plusieurs copolymères à blocs spécifique, le ou les fils gainés (formant ainsi un renfort composite) étant eux-mêmes noyés dans une composition de caoutchouc à base d'au moins un élastomère diénique.

Le gainage de renforts métalliques par des matières thermoplastiques tels que par exemple polyamide ou polyester est connu depuis fort longtemps, notamment afin de protéger ces renforts contre diverses agressions externes tels qu'oxydation ou abrasion, ou encore en vue de rigidifier structurellement, solidariser entre eux divers ensembles de fils ou assemblages de fils tels que des câbles, et ainsi augmenter notamment leur résistance au flambage.

De tels renforts composites, ainsi que leur utilisation dans des articles en caoutchouc tels que des bandages pneumatiques, ont été décrits dans de nombreux documents brevet.

On connaît par exemple de l'état de la technique un renfort en acier ou en textile aramide gainé par une matière thermoplastique telle que polyester ou polyamide, en vue d'améliorer sa résistance à l'abrasion.

La demande de brevet FR 2 601 293 a décrit le gainage d'un câble métallique avec du polyamide pour l'utiliser comme tringle dans un bourrelet de bandage pneumatique, ce gainage permettant avantageusement d'adapter la forme de cette tringle à la structure et aux conditions de fonctionnement du bourrelet du bandage pneumatique qu'elle renforce.

Les documents brevet FR 2 576 247 ou US 4 754 794 ont également décrit des fils ou câbles métalliques doublement voire triplement gainés par deux, respectivement trois matières thermoplastiques différentes (e.g. polyamides) ayant des températures de fusion différentes, en vue d'une part de contrôler la distance entre ces fils ou câbles, d'autre part de supprimer les risques d'usure par frottement ou de corrosion, pour les utiliser comme tringle dans un bourrelet de bandage pneumatique.

Ces renforts ainsi gainés de matière polyester ou polyamide présentent, outre les avantages précités de résistance à la corrosion, de résistance à l'abrasion et de rigidité structurelle, celui non négligeable de pouvoir être ensuite collés à des matrices de caoutchouc diénique en utilisant de simples colles textiles dites "RFL" (résorcinolformaldéhyde-latex) comportant au moins un élastomère diénique tel que du caoutchouc naturel, colles qui de manière connue confèrent une adhésion satisfaisante entre des fibres textiles tels que fibres en polyester ou polyamide et un caoutchouc diénique.

Ainsi, peuvent être utilisés avantageusement des renforts métalliques non revêtus de couches métalliques adhésives tels que laiton, ainsi que des matrices de caoutchouc environnantes dépourvues de sels métalliques tels que sels de cobalt, nécessaires de manière connue au maintien des performances adhésives au cours du temps mais augmentant significativement d'une part le coût des matrices de caoutchouc elles-mêmes, d'autre part leur sensibilité à l'oxydation et au vieillissement (voir par exemple demande WO 2005/113666).

Toutefois, les colles RFL ci-dessus ne sont pas dépourvues d'inconvénient ; elles comportent en particulier comme substance de base le formaldéhyde (ou formol) qu'il est souhaitable de supprimer à terme des compositions adhésives, en raison de l'évolution récente de la réglementation européenne sur ce type de produit.

Ainsi, les concepteurs d'articles en caoutchouc diénique, notamment les manufacturiers de bandages pneumatiques ont pour objectif aujourd'hui de trouver de nouveaux systèmes adhésifs ou de nouveaux renforts pour produits renforcés qui permettent de pallier tout ou partie des inconvénients précités.

Par ailleurs, on connaît du document US2012/0000541 A1 un copolymère à blocs comportant des blocs polyamides, polyoléfines et alkylène utilisé pour assurer la protection contre la corrosion et l'adhérence à des pipeline/tuyaux.

Les demanderesses ont découvert que des copolymères à blocs de structure particulière permettaient d'atteindre cet objectif, c'est-à-dire permettaient de préparer des renforts composites susceptibles d'adhérer directement au caoutchouc.

L'invention a ainsi pour objet un produit renforcé, utilisable notamment pour le renforcement d'un article fini en caoutchouc, comportant un ou plusieurs fils de renforcement, le ou lesdits fils étant recouverts individuellement ou collectivement d'une gaine comprenant une composition de gainage comprenant un ou plusieurs copolymères à blocs comprenant au moins un bloc polyamide, au moins un bloc polyoléfine, au moins un bloc alkylène, et présentant une viscosité à l'état fondu allant de 300 Pa.s à 20 000 Pa.s, en particulier de 300 à 15 000 Pa.s, mesurée à 230°C par rhéologie oscillatoire, le ou les fils gainés étant eux-mêmes noyés dans une composition de caoutchouc.

L'invention a également pour objet un bandage comprenant un tel produit renforcé.

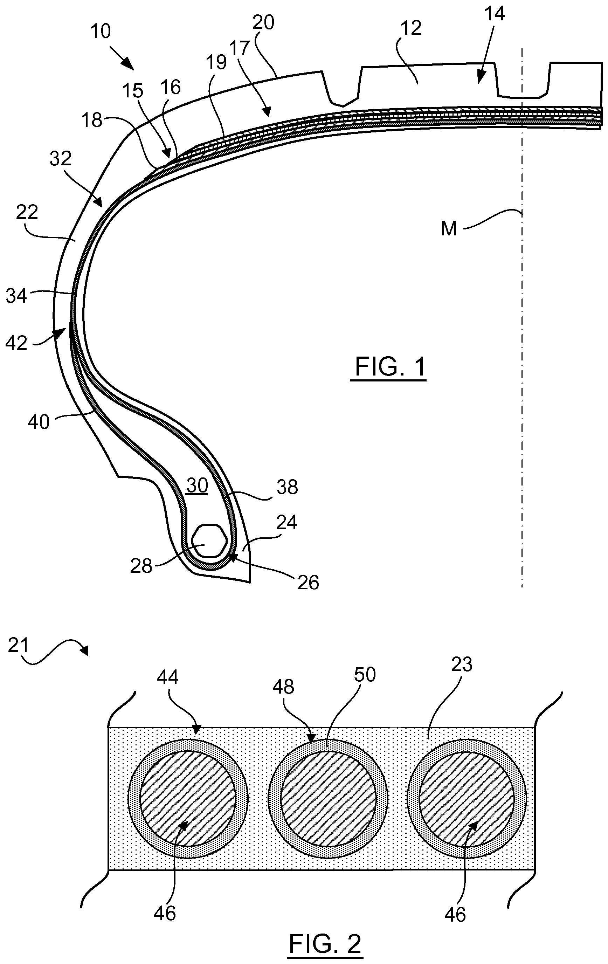

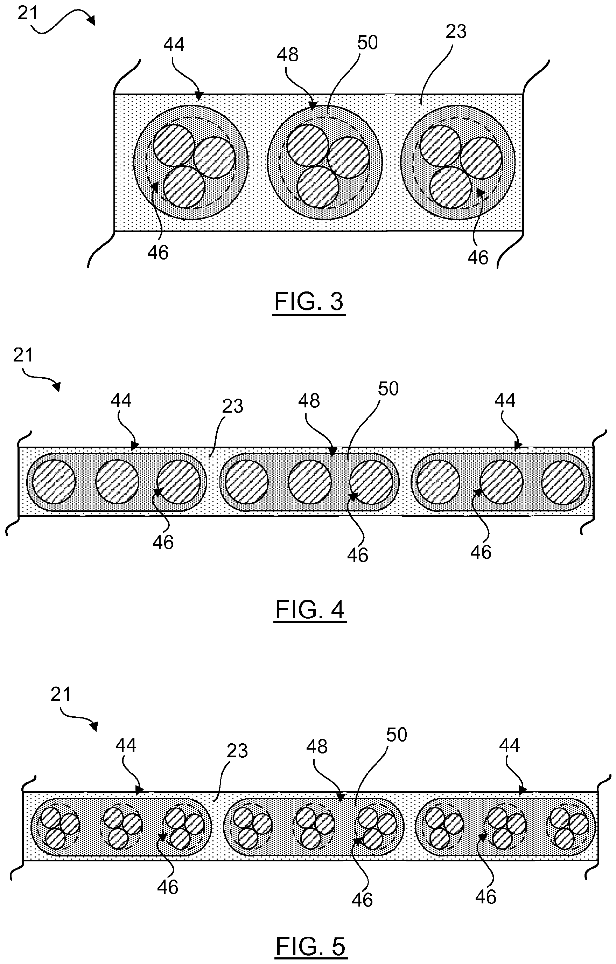

L'invention ainsi que ses avantages seront aisément compris à la lumière de la description et des exemples de réalisation qui suivent, ainsi que des figures relatives à ces exemples qui schématisent :
- en coupe radiale, un bandage pneumatique à armature de carcasse radiale conforme à l'invention, incorporant dans sa ceinture ou dans sa carcasse un produit renforcé selon l'invention (Fig. 1)
- en coupe transversale, un exemple d'un produit renforcé selon l'invention, comprenant 3 fils, chaque fil comprenant un unique monofilament et étant individuellement recouverts d'une gaine, et noyés ensemble dans une composition de caoutchouc (Fig. 2) ;
- en coupe transversale, un autre exemple d'un produit renforcé conforme à l'invention, comprenant 3 fils, chaque fil comprenant 3 monofilaments et étant individuellement recouvert d'une gaine, les 3 fils gainés, étant noyés dans une composition de caoutchouc (Fig. 3) ;
- en coupe transversale, un autre exemple d'un produit renforcé conforme à l'invention, comprenant une bandelette de 3 fils, chaque fil comprenant un unique monofilament, les 3 fils étant recouverts collectivement d'une même gaine et noyés dans une composition de caoutchouc (Fig. 4) ;
- en coupe transversale, un autre exemple d'un produit renforcé conforme à l'invention, comprenant une bandelette de 3 fils, chaque fil comprenant 3 monofilaments, les 3 fils étant recouverts collectivement d'une même gaine et noyés dans une composition de caoutchouc (Fig. 5).

Dans la présente description, sauf indication expresse différente, tous les pourcentages (%) indiqués sont des % en masse.

L'abréviation « pce » signifie parties en poids pour cent parties d'élastomère ou caoutchouc (du total des élastomères si plusieurs élastomères sont présents).

D'autre part, tout intervalle de valeurs désigné par l'expression "entre a et b" ou "compris entre a et b" représente le domaine de valeurs allant de a à b (c'est-à-dire bornes a et b inclues), de même tout intervalle de valeurs désigné par l'expression "de a à b" signifie le domaine de valeurs allant de a jusqu'à b (c'est-à-dire incluant les bornes strictes a et b).

### Fils de renforcement

Dans la présente demande, on entend de manière générale par fil de renforcement ("reinforcing thread") tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. Lorsqu'il est de forme circulaire, son diamètre est de préférence inférieur à 5 mm, plus préférentiellement compris dans un domaine de 0,1 à 2 mm.

Le fil de renforcement peut prendre toute forme connue, il peut s'agir par exemple d'un monofilament élémentaire de diamètre important (par exemple et de préférence égal ou supérieur à 50 µm), d'un ruban élémentaire, d'un film, d'une fibre multifilamentaire (constituée d'une pluralité de filaments élémentaires (ou monofilaments), linéaires ou torsadés, de faible diamètre, typiquement inférieur à 30 µm), d'un retors textile formé de plusieurs fibres retordues ensemble, d'une tresse formée de plusieurs fibres ou monofilaments tressés ensemble, d'un câble textile ou métallique formé de plusieurs fibres ou monofilaments câblés ou retordus ensemble.

Dans la présente demande, on entend de manière générale par renfort filaire, renfort composite, renfort gainé ou élément de renfort, un ou plusieurs fils de renforcement recouvert d'une gaine.

Selon un mode de réalisation préférentiel, le renfort composite utile à la réalisation du produit renforcé selon l'invention peut donc se présenter sous la forme d'un seul fil de renforcement, recouvert dans sa gaine, pour constituer un fil composite unitaire gainé, noyé dans la composition de caoutchouc de l'invention.

Selon un autre mode de réalisation préférentiel, le renfort composite utile à la réalisation du produit renforcé selon l'invention peut aussi se présenter sous la forme de plusieurs fils de renforcement. Dans ce cas, les fils de renforcement (monofilaments, rubans, films, fibres, retors, tresses ou câbles) peuvent être agencés de façon à former un tissé ou un non tissé ou un tricot. Selon un premier sous-mode de réalisation, chaque fil de renforcement est recouvert de sa gaine, puis les différents fils de renforcement gainés sont agencés ensemble. Selon un second sous-mode de réalisation, les fils de renforcement sont agencés ensemble, puis sont alors collectivement recouverts dans leur gaine. Puis ces fils de renforcement gainés individuellement ou collectivement sont noyés dans la composition de caoutchouc, pour constituer un produit renforcé selon l'invention, par exemple une bande, bandelette, un tissu composite en caoutchouc de diverses formes tels que ceux usuellement rencontrés dans la structure des bandages pneumatiques. A titre d'exemples préférentiels de produit renforcés conformes à l'invention, on citera particulièrement les tissus constituant les nappes d'armature de carcasse, les nappes sommet de protection, les nappes sommet de frettage ou les nappes sommet de travail présentes dans les ceintures des bandages pneumatiques.

Selon un mode de réalisation préférentiel, le fil de renforcement est un fil de renforcement métallique comprenant au moins un monofilament métallique.

Par métallique, on entend par définition un fil dans lequel chaque monofilament est constitué majoritairement (c'est-à-dire pour plus de 50% de sa masse) ou intégralement (pour 100% de sa masse) d'un matériau métallique. Chaque monofilament est préférentiellement en acier, plus préférentiellement en acier perlitique (ou ferritoperlitique) au carbone désigné ci-après par "acier au carbone", ou encore en acier inoxydable (par définition, acier comportant au moins 11% de chrome et au moins 50% de fer). Lorsqu'un acier au carbone est utilisé, sa teneur en carbone (% en poids d'acier) est de préférence comprise entre 0,5% et 0,9%. On utilise de préférence un acier du type steel cord à résistance normale (dit "NT" pour " Normal Tensile ") ou à haute résistance (dit "HT" pour " High Tensile ") dont la résistance en traction (Rm) est de préférence supérieure à 2000 MPa, plus préférentiellement supérieure à 2500 MPa et inférieure à 3000 MPa (mesure effectuée en traction selon la norme ISO 6892 de 1984). L'acier peut être revêtu d'une couche adhésive telle que du laiton ou du zinc.

Selon un autre mode de réalisation préférentiel, le fil de renforcement est un fil textile, constitué d'une matière polymérique synthétique ou naturelle, voire d'une matière minérale. A titre d'exemples, on peut citer notamment les fils de renforcement en alcool polyvinylique (PVA), polyamide aliphatique (e.g. polyamides 4-6, 6, 6-6, 11 ou 12), polyamide aromatique (ou "aramide"), polyamideimide, polyimide, polyester (e.g. PET, PEN), polyester aromatique, polyéthylène, polypropylène, polycétone, cellulose, rayonne, viscose, polyphénylène benzobisoxazole (PBO), verre, carbone ou encore céramique.

Comme expliqué précédemment, le ou les fils de renforcement sont recouverts d'une gaine.

Selon l'invention, la gaine comprend une composition de gainage comprenant un ou plusieurs copolymères à blocs.

### Copolymère à blocs

Le copolymère à blocs utile selon la présente invention comporte :
- au moins un bloc polyamide,
- au moins un bloc polyoléfine,
- au moins un bloc alkylène, et
présentant une viscosité à l'état fondu allant de 300 Pa.s à 20 000 Pa.s, en particulier de 300 à 15 000 Pa.s, mesurée à 230°C par rhéologie oscillatoire.

La structure de ces blocs est décrite ci-dessous.

### Bloc polyamide

Les copolymères à blocs utile selon l'invention comportent dans leur structure au moins un bloc polyamide.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Le bloc polyamide peut avoir une structure homopolyamide ou copolyamide.

Par homopolyamide, au sens de la présente invention, on entend un polyamide, qui n'est constitué que de la répétition d'une unique unité.

Par copolyamide, au sens de la présente invention, on entend un polyamide, qui est constitué de la répétition d'au moins deux unités de structure chimique différente. Ce copolyamide peut présenter une structure aléatoire, alternée ou à blocs.

Le bloc polyamide peut comprendre une ou plusieurs unités de structure choisie parmi les amino-acides, les lactames et les unités (diamine). (diacide).

Lorsque le polyamide comporte un aminoacide dans sa structure, il peut être choisi parmi l'acide 9-aminononanoïque (A=9), l'acide 10-aminodécanoïque (A=10), l'acide 10-aminoundécanoïque (A=11), l'acide 12-aminododécanoïque (A=12) et l'acide 11-aminoundécanoïque (A=11) ainsi que ses dérivés, notamment l'acide N-heptyl-11-aminoundécanoïque, A désignant le nombre d'atomes de carbone dans le motif.

Lorsque le polyamide comporte un lactame, il peut être choisi parmi la pyrrolidinone, la 2-pipéridinone, le caprolactame, l'énantholactame, le caprylolactame, le pelargolactame, le décanolactame, l'undecanolactame, et le lauryllactame (A=12).

Lorsque le polyamide comporte est un motif répondant à la formule (diamine en Ca).(diacide en Cb) Ca et Cb désignant le nombre d'atomes de carbone respectivement dans la diamine et le diacide, le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule H₂N-(CH₂)ₐ-NH₂, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), , l'eicosanediamine (a=20), la docosanediamine (a=22) et les diamines obtenues à partir d'acides gras.

A titre de diamine aliphatique linéaire, on peut également citer l'octadécènediamine.

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclohexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP), l'isophoronediamine (a=10), la pipérazine (a=4), l'amino-éthylpipérazine. Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide téréphtalique (noté T), isophtalique (noté I) et les diacides naphtaléniques.

De préférence, le bloc polyamide est aliphatique.

Plus particulièrement, le bloc polyamide comprend au moins un motif choisi parmi PA 6, PA 11, PA12, PA 6.10, PA 6.6, PA 6.12, PA 10.10, PA 10.12.

Encore plus particulièrement, le bloc polyamide comprend au moins un motif possédant un nombre d'atomes de carbone sur atome d'azote supérieur ou égal à 8, et plus particulièrement comprend au moins un motif choisi parmi PA 11, PA12, PA 6.10, PA 6.12, PA 10.10, PA 10.12.

De préférence, le bloc polyamide est choisi parmi les blocs homopolyamide : PA 11, PA12, PA 6.10, PA 6.12, PA 10.10, PA 10.12.

De préférence, le ou les blocs polyamide présentent chacun une masse moléculaire en nombre mesurée par potentiométrie comprise entre 4 000 et 20 000.

De préférence, le copolymère à blocs selon l'invention comporte une teneur en bloc polyamide comprise entre 2 et 98%, de préférence entre 30 et 95%, de manière plus préférée entre 50 et 94% en poids par rapport au poids total du copolymère à blocs.

### Terminaisons de chaîne

Le ou les blocs polyamides peuvent se terminer par des fonctions amine ou acide, ou peuvent être fonctionnalisés de manière à se terminer par des fonctions isocyanate et anhydride, et de préférence se terminent par des fonctions amine.

### Bloc polyoléfine

Les copolymères à blocs utile selon l'invention comportent dans leur structure au moins un bloc polyoléfine.

Par bloc polyoléfine, doit être compris selon l'invention tout homopolymère ou copolymère issu au moins en partie de monomères diènes (monomères porteurs de deux doubles liaisons carbone-carbone, conjuguées ou non). Le bloc polyoléfine comporte des insaturations de type double liaison carbone-carbone. Le bloc polyoléfine insaturée peut appartenir à toute catégorie de polymères diéniques issus au moins en partie de monomères diènes, conjugués ou non. Il s'agit de tout type de bloc polyoléfine au sens connu de l'homme de l'art, à la condition que ce bloc polyoléfine soit insaturé.

Le bloc polyoléfine insaturé comporte des insaturations le long de la chaîne ou bien pendantes à la chaine. Le taux massique des unités monomériques porteuses de ces insaturations varie dans un domaine large qui permet d'englober les différentes catégories de blocs polyoléfines. Ainsi, les blocs polyoléfines appropriés peuvent être faiblement insaturés avec un taux massique d'unités monomériques insaturées d'au moins 1% par rapport à la masse totale du bloc polyoléfine. Selon des variantes ce taux peut alors être d'au moins 5% massique, voire d'au moins 10% massique. Les blocs polyoléfines peuvent également être fortement insaturés, avec un taux massique d'unités monomériques insaturées supérieur à 20% et pouvant atteindre 100% par rapport à la masse totale du bloc polyoléfine. Selon certaines variantes, ce taux peut alors être d'au moins 40% et voire d'au moins 50%.

On entend plus particulièrement par bloc polyoléfine susceptible d'être utilisé dans l'invention, un bloc polyoléfine correspondant à l'une des catégories suivantes:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués ayant de 4 à 12 atomes de carbone, entre eux ou avec un ou plusieurs monomères éthyléniquement insaturés;
(c) tout homopolymère obtenu par polymérisation d'un monomère diène non conjugué ayant de 5 à 12 atomes de carbone;
(d) tout copolymère obtenu par copolymérisation d'un ou plusieurs des diènes non conjugués ayant de 5 à 12 atomes de carbone, entre eux ou avec un ou plusieurs monomères éthyléniquement insaturés;
(e) un copolymère ternaire obtenu par copolymérisation d'éthylène, d'une α-oléfine ayant 3 à 6 atomes de carbone avec un monomère diène non conjugué ayant de 5 à 12 atomes de carbone, comme par exemple les élastomères obtenus à partir d'éthylène, de propylène avec un monomère diène non conjugué tels que décrits en particulier dans les documents WO 2004/035639A1 et US 2005/0239639A1;
(f) un copolymère d'isobutène et d'isoprène (caoutchouc butyle), ainsi que les versions halogénées, en particulier chlorées ou bromées, de ce type de copolymère;
(g) le caoutchouc naturel;
(h) un copolymère oléfinique insaturé dont la chaine comporte au moins des unités monomériques oléfiniques, c'est à dire des unités issues de l'insertion d'au moins une mono-oléfine, et des unités diéniques issues d'au moins un diène conjugué ou non.
(i) un mélange de plusieurs des élastomères définis en (a) à (h) entre eux.

A titre de monomère diène conjugué approprié pour la synthèse des blocs polyoléfines (a), (b) et (h), on peut citer le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de monomère diène non conjugué approprié pour la synthèse des blocs polyoléfines (c), (d) et (e), on peut citer le pentadiène-1,4, l'hexadiène-1,4, l'éthylidène norbornène, le dicyclopentadiène;

Les copolymères (b) ou (d) peuvent contenir entre 99% et 1% massique d'unités diéniques et entre 1% et 99% massique d'unités vinylaromatiques, nitriles vinyliques et/ou esters acryliques.

A titre de monomère mono-oléfine approprié pour la synthèse des blocs polyoléfines (h), on peut citer l'éthylène, une α-oléfine ayant 3 à 6 atomes de carbone, par exemple le propylène. Préférentiellement, le monomère mono-oléfine est l'éthylène.

Selon certaines variantes, le copolymère oléfinique (h) susceptible d'être utilisé dans le copolymère à bloc utile selon l'invention, est un copolymère dont la chaine comporte des unités monomériques oléfiniques, c'est à dire des unités issues de l'insertion d'au moins une mono-oléfine, et des unités diéniques issues d'au moins un diène conjugué. Selon d'autres variantes, les unités ne sont pas intégralement des unités issues de monomères diéniques et de monomères mono-oléfiniques. Selon ces variantes, d'autres unités issues par exemple d'un monomère éthyléniquement insaturé tel que décrit plus haut, sont présentes dans la chaine carbonée.

Parmi les blocs polyoléfines issus d'au moins un monomère diène conjugué, on peut citer comme exemples non exclusifs, le polybutadiène, le polyisoprène, le poly chloroprène, le polyisobutylène, les copolymères à blocs du butadiène et de l'isoprène avec le styrène comme le poly styrène-b-butadiène (SB), le poly styrène-b-butadiène-b-styrène (SBS), le poly styrène-b-isoprène-b-styrène (SIS), les poly styrène-b- (isoprène-stat-butadiène) -b-styrène ou poly styrène-b-isoprène-b-butadiène-b-styrène (SIBS), le SBS hydrogène (SEBS), le poly styrène-b-butadiène-b-méthyl méthacrylate (SBM), les copolymères statistiques du butadiène avec le styrène (SBR) et l'acrylonitrile (NBR), les copolymères statistiques de l'isoprène avec le styrène (SIR), les copolymères statistiques de l'isoprène et du butadiène avec le styrène (SBIR), les caoutchoucs butyle ou halogénés, les terpolymères d'éthylène-propylène-diène (EPDM), les copolymères d'éthylène-diène, ainsi que leurs mélanges.

Parmi ceux-ci, le ou les blocs polyoléfines sont tout particulièrement choisis dans le groupe des blocs polyoléfines constitué par les polybutadiènes (en abrégé "BR"), les polyisoprènes (IR) de synthèse, le caoutchouc naturel (NR), les copolymères de butadiène, les copolymères d'isoprène, les copolymères d'éthylènediène et les mélanges de ces polymères.

De préférence, le bloc polyoléfine est du polybutadiène. Le polybutadiène peut comporter des séquences 1,4 cis, 1,4 trans ou 1,2 ou un mélange de celles-ci. De préférence, le polybutadiène comporte majoritairement (c'est-à-dire pour plus de 50 % en nombre de séquences 1,4 et 1,2) des séquences en 1,2.

Avantageusement, le copolymère à blocs comprend généralement une teneur en bloc polyoléfine comprise entre 2 et 98%, de préférence entre 5 et 70, de manière plus préférée entre 6 et 50%, préférentiellement entre 8 et 30, et de manière encore plus préférée et de manière encore plus préférée entre 9 et 25 % en poids par rapport au poids total du copolymère à blocs.

### Terminaisons de chaîne

Le ou les blocs polypolyoléfine peuvent être fonctionnalisés de manière à se terminer par des fonctions choisies parmi les amine, acide, alcool, isocyanate et anhydride.

De manière encore préférée, le bloc polyoléfine est un bloc polybutadiène, terminé par des fonctions alcools.

Le produit de dénomination commerciale Krasol® ou Poly Bd® commercialisé par la société Cray Valley peut être utilisé.

### Propriétés physico-chimiques du bloc polyoléfine

Le bloc polyoléfine peut présenter une viscosité inférieure à 60 000 cps, de préférence inférieure à 40 000 cps, et de préférence inférieure à 20 000 cps et de façon encore préférentielle entre 1 000 et 20 000 cps, la viscosité étant mesurée à 25°C avec un appareil de Brookfield et selon la méthode Brookfield.

Avantageusement, le bloc polyoléfine a une masse moléculaire en nombre comprise entre 1 000 et 10 000, en particulier entre 1 000 et 4 000.

### Liaisons intermédiaires entre les blocs

Le ou les blocs polyamides et polyoléfines peuvent se terminer par des fonctions choisies parmi les amine, acide, isocyanate, alcool et anhydride. Le ou les blocs polyoléfines et polyamides peuvent être modifiés de manière à se terminer par ces fonctions.

Par conséquent, les liaisons entre les blocs peuvent être des fonctions ester, amide, urée et/ou uréthane.

### Bloc alkylène

Les copolymères à blocs utile selon l'invention comportent dans leur structure au moins un bloc alkylène.

Par bloc alkylène, on entend au sens de la présente invention une chaîne aliphatique, linéaire, saturée.

Le ou les blocs alkylènes sont reliés aux autres blocs polymères du copolymère selon l'invention par l'intermédiaire de fonctions, telles que celles choisies parmi les amine, acide, alcool, isocyanate et anhydride.

De préférence, le bloc alkylène est un diacide en C₂-C₃₆, plus préférentiellement en C₈-C₃₆, en particulier de C₁₀-C₃₆.

De manière plus préférée, le copolymère à blocs utile selon l'invention comporte au moins un bloc alkylène terminé par des fonctions acide.

De manière encore plus préférée, le copolymère à blocs utile selon l'invention comporte au moins un bloc alkylène comportant entre 2 et 36 atomes de carbone, de préférence entre 8 et 36 atomes de carbones, en particulier entre 10 et 36 atomes de carbones. Plus particulièrement, le bloc alkylène est un diacide gras.

Plus particulièrement, le bloc alkylène est un dimère d'acide gras ou encore un acide gras dimérisé, de préférence un diacide en Cs-C36.

De préférence, le bloc alkylène présente une masse molaire inférieure à 1000 g/mol, de préférence inférieure à 800 g/mol, de préférence encore inférieure à 600 g/mol.

De préférence, le copolymère à blocs utile selon l'invention se caractérise par un agencement particulier : le bloc alkylène se trouve entre un bloc polyamide et un bloc polyoléfine.

Par conséquent, le bloc alkylène joue le rôle de lien ou linker en langue anglaise entre les blocs polymères polyamide et polyoléfine.

Le produit de dénomination commerciale Pripol® commercialisé par la société Croda peut être utilisé.

Le produit de dénomination commerciale Empol® commercialisé par la société Cognis peut être utilisé.

Le produit de dénomination commerciale Unydime® commercialisé par la société Arizona Chemical peut être utilisé.

Le produit de dénomination commerciale Radiacid® commercialisé par la société Oleon peut être utilisé.

### Agencement du copolymère

Selon un premier mode de réalisation, le copolymère à blocs utile selon l'invention est de formule suivante :

PA-(R-Pol)n-R-Pol-R-PA

avec n compris entre 0 et 100, en particulier de 0 à 10, de préférence 0 ou 1,
PA désignant le bloc polyamide,
R désignant le bloc alkylène,
Pol désignant le bloc polyoléfine.

Selon un second mode de réalisation, le copolymère à blocs utile selon l'invention est de formule suivante :

PA-(R-Pol-PA)n-R-Pol-R-PA

avec n compris entre 0 et 100, en particulier de 0 à 10, de préférence 0 ou 1,
PA, R et Pol étant tels que définis ci-dessus.

Selon un troisième mode de réalisation, le copolymère à blocs utile selon l'invention est de formule suivante :

PA-(R-Pol-R-PA)n-R-Pol-R-PA

avec n compris entre 0 et 100, en particulier de 0 à 10, de préférence 0 ou 1,
PA, R et Pol étant tels que définis ci-dessus.

### Teneur des blocs

De préférence, le copolymère à blocs utile selon l'invention comporte une teneur en bloc alkylène comprise entre 0,1 et 25%, de préférence entre 1 et 15% en poids par rapport au poids total du copolymère à blocs.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 10 et 25%, en poids par rapport au poids total du copolymère à blocs, la somme étant égale à 100%.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène terminé par des fonctions alcools.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène et le bloc alkylène est un diacide en C₈-C₃₆, en particulier de C₁₀-C₃₆.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène et le bloc alkylène est un diacide gras.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène et le bloc alkylène est un dimère d'acide gras.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un diacide en C₈-C₃₆, en particulier de C₁₀-C₃₆.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un diacide gras.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un dimère d'acide gras.

### Viscosité

Le copolymère à blocs selon l'invention présente une viscosité à l'état fondu allant de 300 Pa.s, à 20 000 Pa.s, en particulier de 300 à 15 000 Pa.s, de préférence allant de 500 à 10 000 Pa.s, et plus particumièrement de 500 à 5 000 Pa.s mesurée à 230°C par rhéologie oscillatoire à une fréquence de 1 Hz, 5% de déformation, selon la norme ISO 6721-10 :1999. La méthode de mesure suivie pour effectuer cette mesure est la suivante :
Plan plan : 30 mn à 230°C, 5% de déformation selon les conditions opératoires suivantes :
Appareil : PHYSICA MCR301
Géométrie : plans parallèles de 25mm de diamètre
Températures : 230°C
Fréquence : 100 à 0.01Hz
Durée : 10minutes
Atmosphère : Balayage d'azote.

### Bloc allongeur de chaîne

Le copolymère à blocs utile selon l'invention peut comprendre éventuellement au moins un bloc allongeur de chaîne.

Ce bloc allongeur de chaîne est de structure :

Y1-A'-Y1

avec A' étant un biradical hydrocarboné de structure non polymérique (ni polymère, ni oligomère, ni prépolymère),
porteur de 2 fonctions réactives terminales Y1 identiques (tel que défini dans la formule ci-dessus), réactives par polyaddition (sans élimination de sous-produit de réaction), avec au moins une fonction en fin de chaîne du copolymère à bloc utile selon l'invention, de préférence de masse moléculaire en nombre inférieure à 500 et plus préférentiellement inférieure à 400,
en particulier la fonction réactive Y1 est choisie parmi: oxazine, oxazoline, oxazolinone, oxazinone, imidazoline, époxy, isocyanate, maléimide, anhydride cyclique.

Comme exemples convenables d'allongeurs de chaîne, on peut citer les suivants :
- lorsque les terminaisons de chaîne sont des fonctions NH2 ou OH, de préférence NH2, l'allongeur de chaîne Y1-A'-Y1 correspond à :
   Y1 choisi parmi les groupements : maléimide, isocyanate éventuellement bloqué, oxazinone et oxazolinone, anhydride cyclique, de préférence oxazinone, anhydride et oxazolinone et
   A' est un espaceur ou radical carboné portant les fonctions ou groupements réactifs Y1, choisi parmi :
- une liaison covalente entre deux fonctions (groupements) Y1 dans le cas où Y1 = oxazinone et oxazolinone ou
- une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire en nombre de 14 à 200 g.mol-1,

L'allongeur de chaîne Y1-A'-Y1 peut également correspondre à une structure dans laquelle
Y1 est un groupement caprolactame et
A' est un radical carbonyle tel que le carbonyl biscaprolactame ou à A' pouvant être un téréphtaloyle ou un isophtaloyle,

L'allongeur de chaîne Y1-A'-Y1 peut également porter un groupement Y1 d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthène tétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
et
- lorsque les terminaisons de chaîne sont des fonctions COOH
   ledit allongeur de chaîne Y1-A'-Y1 correspond à :
   Y1 choisi parmi les groupements : oxazoline, oxazine, imidazoline, aziridine, comme le 1, 1'-iso- ou téré- phtaloyl-bis (2-methyl aziridine) ou epoxy,
   A' étant un espaceur ou un radical carboné tel que défini ci-dessus.

Plus particulièrement, quand dans ledit allongeur Y1-A'-Y1, ladite fonction Y1 est choisie parmi oxazinone, oxazolinone, oxazine, oxazoline ou imidazoline, en particulier oxazoline, dans ce cas, dans l'allongeur de chaîne représenté par Y1-A'-Y1, A' peut représenter un alkylène tel que -(CH2)m- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas où Y1 est un époxy, l'allongeur de chaîne peut être choisi parmi les bisphenol A diglycidyl éther (DGEBA), et son dérivé hydrogéné (cycloaliphatique) bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn <500, polypropylène glycol diglycidyl éther de Mn <500, polytétraméthylène glycol diglycidyl éther de Mn <500, résorcinol diglycidyl éther, néopentylglycol diglycidyl éther, bisphenol A polyéthylène glycol diglycidyl éther de Mn <500, bisphénol A polypropylèneglycol diglycidyl éther de Mn <500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2-Cyclohexanedicarboxylate, et leurs mélanges.

Dans le cas du carbonyl- ou térephtaloyl- ou isophtaloylbiscaprolactame comme allongeur de chaîne Y1-A'-Y1, les conditions préférées évitent l'élimination de sous-produit, comme le caprolactame lors de ladite polymérisation et mise en œuvre à l'état fondu.

Dans le cas éventuel cité ci-haut où Y1 représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec des fonctions NH2 issues du copolymère à blocs, les conditions préférées évitent toute formation de cycle imide lors de la polymérisation et lors la mise en œuvre à l'état fondu.

Pour les terminaisons OH ou NH2 du copolymère à bloc, le groupement Y1 est choisi de préférence parmi : anhydride, isocyanate (non bloqué), oxazinone et oxazolinone, plus préférentiellement oxazinone et oxazolinone, avec comme espaceur (radical) A' étant comme défini ci-haut.

Comme exemples d'allongeurs de chaîne portant des fonctions réactives Y oxazoline ou oxazine convenables à la mise en œuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

A titre d'exemple, dans le cas où les terminaisons CO2H du copolymère à blocs et l'allongeur de chaîne Y1-A'-Y1 est la 1,4-phénylène bisoxazoline, le produit de réaction obtenu possède au moins un motif récurrent de structure suivante :

-O-C(O)-PA-C(O)-O-R1-NH-C(O)-A'-C(O)-NH-R1-

dans laquelle :
PA est un polyamide à terminaisons acides HO-C(O)-PA-C(O)-OH tel que défini ci-dessus,
R1 (CH2)2, et
A' est un phényle.

Comme exemples d'allongeurs de chaîne à fonction réactive Y1 imidazoline convenables à la mise en œuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y1 = oxazinone ou oxazolinone qui conviennent à la mise en œuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y1 oxazinones (cycle à 6 atomes) et oxazolinones (cycle à 5 atomes) convenables, on peut citer les groupements Y1 dérivés de : benzoxazinone d'oxazinone ou d'oxazolinone, avec comme espaceur A' pouvant être une simple liaison covalente avec pour allongeurs correspondants respectifs étant : bis- (benzoxazinone), bisoxazinone et bisoxazolinone.

A' peut être également un alkylène en C1 à C14, de préférence en C2 à C10 mais de préférence A' est un arylène et plus particulièrement il peut être un phénylène (substitué par Y1 en positions 1,2 ou 1,3 ou 1,4) ou un radical naphtalène (disubstitué par Y1) ou un phtaloyle (iso- ou téréphtaloyle) ou A' peut être un cycloalkylène.

Pour les fonctions Y1 comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C1 à C14, de préférence en C2 à C10. Le radical A' est de préférence un arylène et, plus particulièrement, il peut être un phénylène (substitué par Y1 en positions 1,2 ou 1,3 ou 1,4) ou un radical naphtalène (disubstitué par Y1) ou un phtaloyle (iso- ou téréphtaloyle) ou A' peut être un cycloalkylène.

Dans le cas où Y1 = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, 1a 1, 1' isophtaloyl-bis(2-méthyl aziridine).

La présence d'un catalyseur de la réaction entre le copolymère à bloc et ledit allongeur Y1-A'-Y1 à un taux allant de 0,001 à 2%, de préférence de 0,01 à 0,5% par rapport au poids total de deux coréactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

De préférence, l'allongeur de chaîne est le dianhydride 3,3',4,4'-benzophénone tétracarboxylique. Plus particulièrement, le copolymère à blocs se termine par des extrémités amine et le dianhydride 3,3',4,4'-benzophénone tétracarboxylique, utilisé en tant qu'allongeur de chaine réagit avec ces extrémités amine.

Comme déjà précisé, ledit allongeur de chaîne a une structure non polymérique et de préférence une masse moléculaire en nombre inférieure à 500, plus préférentiellement inférieure à 400.

De préférence, le copolymère à blocs utile selon l'invention comporte au moins un bloc allongeur de chaîne situé à une ou plusieurs extrémités polyamide du copolymère.

Selon un premier mode de réalisation, le copolymère à blocs est de formule suivante :

(Y1-A'-Ya)-(copo blocs)-[(Ya-A'-Ya)-(copo blocs)]m-(Ya-A' Y1)

dans laquelle
- copo blocs désigne le copolymère à blocs tel que défini ci-dessus,
- Ya-A'-Ya désigne un allongeur de chaine Y1-A'-Y1 tel que défini ci-dessus pour lequel les fonctions réactives Y1 ont réagi avec les extrémités du copolymère à blocs conduisant à des fonctions Ya,
- (Y1-A'-Ya) et -(Ya-A' Y1) désignent des allongeurs de chaine dans lequel une seule fonction réactive a réagi,
- m est un entier entre 0 et 100.

Selon un second mode de réalisation, le copolymère à blocs est de formule suivante :

X-(copo blocs)-(Ya-A'-Ya)-[(copo blocs)-(Ya-A'-Ya)]m-(copo blocs)- X

dans laquelle
- X désigne la fonction libre du copolymère à blocs,
- les autres éléments ayant les mêmes significations que pour le mode de réalisation précédemment décrit.

Le type de structure de copolymère obtenu dépendra du nombre d'équivalents d'allongeur de chaine introduit dans le milieu réactionnel lors de la préparation dudit allongeur de chaine.

Le taux dedit allongeur dans le dit copolymère à blocs varie de 1 à 20%, en particulier de 5 à 20% en poids par rapport au poids total du copolymère à blocs.

Avantageusement, le copolymère à blocs utile selon l'invention comprend (ou est constitué de)
- au moins un bloc polyamide, dont la teneur en bloc(s) polyamide est comprise entre 2 et 98% en poids par rapport au poids total du copolymère à blocs,
- au moins un bloc polyoléfine, dont la teneur en bloc(s) polyoléfine est comprise entre 2 et 98% en poids par rapport au poids total du copolymère à blocs,
- au moins un bloc alkylène, dont la teneur en bloc(s) alkylène est comprise entre 1 et 15% en poids par rapport au poids total du copolymère à blocs, et
- au moins un bloc allongeur de chaîne, dont la teneur en bloc(s) dudit allongeur de 1 à 20% par rapport au poids total du copolymère à blocs, le total étant égal à 100%.

Avantageusement, dans ce dernier copolymère à blocs utile selon l'invention, ledit allongeur comporte des fonctions réactives Y1, choisies parmi les anhydride, isocyanate (non bloqué), oxazinone et oxazolinone, plus préférentiellement anhydride, oxazinone et oxazolinone, l'espaceur ou le radical A' étant comme défini ci-haut.

Avantageusement, dans le copolymère à bloc utile selon l'invention comprenant (ou constitué de) un bloc polyamide, un bloc alkylène et un bloc polyoléfine tel que défini ci-dessus, le taux dedit allongeur de 5 à 20% par rapport au poids total du copolymère à blocs, le total étant égal à 100%.

Avantageusement, dans ce dernier copolymère à blocs utile selon l'invention, ledit allongeur comporte des fonctions réactives Y1, choisies parmi les anhydride, isocyanate (non bloqué), oxazinone et oxazolinone, plus préférentiellement anhydride, oxazinone et oxazolinone, l'espaceur ou le radical A' étant comme défini ci-haut.

### Masse moléculaire

Le copolymère à blocs peut présenter une masse moléculaire en nombre mesurée par potentiométrie comprise entre 5 000 et 50 000, de préférence entre 7 000 et 40 000 g/mol.

La masse moléculaire en nombre est calculée selon la formule suivante : Mn = 2/([COOH]+[NH2]) en g/mol

Avec les concentrations en fins de chaine acide [COOH] et amine [NH2] en eq/g.

Le dosage potentiométrique des fins de chaine acide se fait par l'hydroxyde de tétra-n-butylammonium dans l'alcool benzylique 0.02N.

Le dosage potentiométrique des fins de chaine amine se fait par l'acide perchlorique 0.02N dans le m-crésol.

Selon un premier mode de réalisation de l'invention, lorsque le copolymère à blocs comporte un allongeur de chaine, alors le ou les blocs polyamide présentent chacun une masse moléculaire en nombre mesurée par potentiométrie comprise entre 4 000 et 15 000.

Selon un second mode de réalisation de l'invention, lorsque le copolymère à blocs ne comporte pas d'allongeur de chaine, alors le ou les blocs polyamide présentent chacun une masse moléculaire en nombre mesurée par potentiométrie comprise entre 6 000 et 15 000.

Le copolymère à blocs utile selon l'invention est un copolymère thermoplastique. Le copolymère à blocs utile selon l'invention n'est pas un caoutchouc. Le copolymère à blocs utile selon l'invention n'est pas non plus un copolymère thermodurcissable.

Selon un mode de réalisation préféré de l'invention, le copolymère à blocs comprend :
- au moins un bloc polyamide, à terminaison amine, dont la teneur en bloc(s) polyamide est de 70 à 92% par rapport au poids total du copolymère à blocs ;
- au moins un bloc polyoléfine, qui est du polybutadiène, dont la teneur en bloc(s) polyoléfine est de 10 à 25% par rapport au poids total du copolymère à blocs ;
- au moins un bloc alkylène, qui est un diacide en C₈-C₃₆, dont la teneur en bloc(s) alkylène est de 1 à 15% par rapport au poids total du copolymère à blocs ; et
présentant une viscosité à l'état fondu allant de 300 Pa.s, à 20 000 Pa.s, en particulier de 300 à 15 000 Pa.s, mesurée à 230°C par rhéologie oscillatoire.

Selon un second mode de réalisation préféré de l'invention, le copolymère à blocs comprend
- au moins un bloc polyamide, à terminaison amine, dont la teneur en bloc(s) polyamide est de 70 à 92% par rapport au poids total du copolymère à blocs ;
- au moins un bloc polyoléfine, qui est du polybutadiène, dont la teneur en bloc(s) polyoléfine est de 10 à 25% par rapport au poids total du copolymère à blocs ;
- au moins un bloc alkylène, qui est un diacide en C₈-C₃₆, dont la teneur en bloc(s) alkylène est de 1 à 15% par rapport au poids total du copolymère à blocs ; et
- au moins un bloc allongeur de chaîne en une teneur de 1 à 20% par rapport au poids total du copolymère à blocs,
présentant une viscosité à l'état fondu allant de 300 Pa.s, à 20 000 Pa.s, en particulier de 300 à 15 000 Pa.s, mesurée à 230°C par rhéologie oscillatoire.

Le procédé de préparation du copolymère à blocs utile selon l'invention comprend une étape de mélange des différents blocs.

De préférence, le procédé comprend les étapes successives suivantes :
- une étape de mélange des blocs polyoléfine et alkylène, le rapport molaire entre des blocs polyoléfine et les blocs alkylène étant supérieur ou égal à ½, puis
- une étape de mélange du ou des blocs polyamide avec le mélange obtenu à l'étape précédente.

Le procédé de préparation peut comprendre une étape supplémentaire de mélange de blocs allongeur de chaine tel tel que défini ci-dessus avec le mélange obtenu à l'étape précédente.

### Gainage

Selon un mode de réalisation, la gaine comprend une unique couche de la composition de gainage définie précédemment.

Selon un autre mode de réalisation, la gaine comprend plusieurs couches, au moins l'une d'entre elles comprenant la composition de gainage définie précédemment.

La composition de gainage peut consister en le copolymère à blocs ou peut comprendre un ou plusieurs autres constituants, par exemple choisis parmi les polymères thermoplastiques, les élastomères et d'autres composants non polymériques, les adjuvants aidant à la transformation (ou processing aids), les charges, les stabilisants thermiques, comme les stabilisants thermiques organiques à base de phosphite, les stabilisants thermiques à base de cuivre, les colorants, les agents de démoulage, les agents d'ignifugation, les agents tensioactifs, les azurants optiques, les anti-oxydants, tels que ceux à base de phénol ou le produit commercialisé sous la dénomination Naugard 445® commercialisé par la société CHEMTURA, les anti-UV tels que les HALS et leurs mélanges. De préférence, les colorants sont présents en une proportion de 0 à 1,5%, notamment de 0,5 à 1% en poids par rapport au poids total de la composition. De préférence, les stabilisants thermiques sont présents en une proportion de 0 à 2%, notamment de 0,5 à 1% en poids par rapport au poids total de la composition et les antioxydants sont présents en proportion de 0 à 2%, notamment de 0,5 à 1% en poids par rapport au poids total de la composition.

La composition de gainage peut également comprendre des catalyseurs, tels que de l'acide phosphorique, hypophosphoreux (H₃PO₂, H₃PO₃ et H₃PO₄).

Parmi les adjuvants aidant à la transformation ou processing aids, on peut citer les stéarates, tels que les stéarates de calcium ou de zinc, les cires naturelles, les polymères comprenant du tétrafluoroéthylène (TFE).

La proportion pondérale en processing aids est classiquement comprise entre 0,01 et 0,3% en poids, avantageusement entre 0,02 et 0,1% en poids, par rapport au poids total de la composition.

Parmi les charges, on peut citer la silice, le graphite, le graphite expansé, le noir de carbone, les billes de verre, le kaolin, la magnésie, les scories, le talc, les nanocharges (nanotubes de carbone), les pigments, oxydes métalliques (oxyde de titane), les métaux, les fibres (aramides, de verre, de carbone).

En fonction de la nature des charges, la quantité de ces dernières peut représenter jusqu'à 30% en poids, du poids total de la composition de gainage.

Selon un mode de réalisation préféré, la gaine comprend une unique couche de la composition de gainage, la composition de gainage consistant en le copolymère à blocs défini précédemment.

La gaine présente dans le renfort composite de l'invention présente de préférence une épaisseur variant de 35 µm à 200 µm.

Selon un mode de réalisation préféré de l'invention, la composition de gainage comporte au moins 70% en poids du copolymère à blocs selon l'invention.

Selon un mode de réalisation particulier, le renfort composite de l'invention, c'est-à-dire le ou les fils de renforcement recouverts de la gaine, comprend de 70 à 85%, en poids, par rapport au poids du renfort composite, du ou des fils de renforcement et 15 à 30% en poids, par rapport au poids du renfort composite, de la composition de gainage telle que définie précédemment.

### Procédé de gainage du ou des fils de renforcement

Comme expliqué précédemment, le ou les fils de renforcement recouverts de la composition de gainage forment un renfort composite.

Le renfort composite utile à l'invention est susceptible d'être préparé selon un procédé spécifique comprenant une étape de recouvrement du ou des fils de renforcement par un copolymère à blocs tel que défini précédemment.

Cette étape est conduite de manière connue de l'homme du métier, par exemple en ligne et en continu ou pas. Elle consiste par exemple simplement à faire passer le ou les fils de renforcement, à travers des filières de diamètre adapté, dans des têtes d'extrusion chauffées à des températures appropriées, ou encore dans un bain d'enduction contenant le copolymère à blocs mis préalablement en solution dans un solvant (ou mélange de solvants) organique approprié.

Selon un premier mode de réalisation préférentiel possible, le ou les fils de renforcement sont préalablement chauffés, par exemple par induction ou par rayonnement IR, avant passage dans les têtes d'extrusion respectives. En sortie de chaque tête d'extrusion, le ou les fils de renforcement ainsi gainés sont ensuite refroidis suffisamment de manière à solidifier la couche de polymère respective, par exemple avec de l'air ou un autre gaz froid, ou par passage dans un bain d'eau suivi d'une étape de séchage.

A titre d'exemple, le recouvrement d'un fil de renforcement de diamètre proche de 0,6 mm, par exemple d'un câble métallique constitué simplement de deux monofils élémentaires de diamètre 0,3 mm torsadés ensemble, par une première couche de copolymère à blocs d'épaisseur maximale égale à environ 0,4 mm, pour l'obtention d'un fil de renforcement gainé ayant un diamètre total d'environ 1 mm, est réalisé sur une ligne d'extrusion-gainage comportant deux filières, une première filière (contre-filière ou filière amont) de diamètre égal à environ 0,65 mm et une seconde filière (ou filière aval) de diamètre égal à environ 0,95 mm, disposées toutes deux dans une tête d'extrusion portée à environ 300°C. Le copolymère à blocs, fondu à une température de 290°C dans l'extrudeuse, recouvre ainsi le fil de renforcement, par le biais de la tête de gainage, à une vitesse de défilement du fil égale typiquement à plusieurs dizaines de m/min, pour un débit de pompe d'extrusion typiquement de plusieurs dizaines de cm3/min. En sortie de ce gainage, le fil peut être immergé dans un bac de refroidissement rempli d'eau froide, pour solidifier et figer le polyamide dans son état amorphe, puis séché par exemple par passage de la bobine de réception à l'étuve.

A l'issue de ces opérations, par exemple directement en sortie de la tête de gainage ou du bain d'enduction (après évaporation du solvant dans le deuxième cas) précédemment décrits, le fil composite traverse un four-tunnel, par exemple de plusieurs mètres de long, pour y subir un traitement thermique sous air.

Cette température de traitement est par exemple comprise entre 150°C et 300°C, pour des durées de traitement de quelques secondes à quelques minutes selon les cas, étant entendu que la durée du traitement sera d'autant plus courte que la température sera élevée, et que le traitement thermique ne doit évidemment pas conduire à une refusion ou même un ramollissement excessif des matières utilisées.

Ainsi terminé, le renfort composite de l'invention est avantageusement refroidi, par exemple à l'air, pour éviter des problèmes de collage parasite lors de son enroulement sur la bobine de réception finale.

L'homme du métier saura ajuster la température et la durée du traitement en fonction des conditions particulières de mise en œuvre de l'invention, notamment de la nature exacte de l'élément de renfort gainé fabriqué, notamment selon que l'on traite des monofilaments pris individuellement, des câbles constitués de plusieurs monofilaments ou des groupes de tels monofilaments ou câbles tels que des bandelettes.

En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Les étapes du procédé de l'invention précédemment décrites peuvent être avantageusement complétées par un traitement final de réticulation tridimensionnelle de l'élément de renfort gainé, pour renforcer encore sa propre cohésion, notamment dans les cas où ce renfort composite est destiné à une utilisation ultérieure à une température relativement élevée, typiquement supérieure à 100°C. Cette réticulation pourra être conduite par tout moyen connu, par exemple par des moyens de réticulation physiques tels que bombardement ionique ou électronique, ou par des moyens de réticulation chimiques, par exemple en introduisant un agent réticulant (e.g. huile de lin) dans la composition, par exemple au cours de son extrusion, ou encore en introduisant dans la composition un système de vulcanisation (i.e., à base de soufre).

Une réticulation pourra être également obtenue lors de la cuisson des bandages pneumatiques (ou plus généralement des articles en caoutchouc) que le renfort composite utile à l'invention peut être destiné à renforcer, grâce au propre système de réticulation présent dans les compositions de caoutchouc diénique constitutives de tels bandages (ou articles) et entrant au contact du renfort composite de l'invention.

### Composition de caoutchouc

Comme expliqué précédemment, le ou les fils gainés sont noyés dans une composition de caoutchouc. Par composition de caoutchouc, on entend une composition comprenant au moins un élastomère, de préférence diénique.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions de caoutchouc du produit renforcé selon l'invention:
(a) tout homopolymère pouvant être obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène (ou isoprène), les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés. Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplé et/ou étoilé à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprènestyrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition de caoutchouc est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprènestyrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés. Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans 1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis 1,4.

Selon un mode de réalisation préférentiel particulier, l'élastomère diénique est un élastomère majoritairement isoprénique (c'est-à-dire dont la fraction massique d'élastomère isoprénique est la plus grande, comparée à la fraction massique des autres élastomères). Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis 1,4 de synthèse; parmi ces polyisoprènes de synthèse, sont utilisés de préférence des polyisoprènes ayant un taux (% molaire) de liaisons cis 1,4 supérieur à 90%, plus préférentiellement encore supérieur à 98%. Préférentiellement selon ce mode de réalisation, le taux d'élastomère diénique isoprénique est de plus de 50 pce (c'est-à-dire de 50 à 100 pce), plus préférentiellement d'au moins 60 pce (c'est-à-dire de 60 à 100 pce), de manière plus préférentielle d'au moins 70 pce (c'est-à-dire de 70 à 100 pce), plus préférentiellement encore d'au moins 80 pce (c'est-à-dire de 80 à 100 pce) et de manière très préférentielle d'au moins 90 pce (c'est-à-dire de 90 à 100 pce). En particulier selon ce mode de réalisation, le taux d'élastomère diénique isoprénique est très préférentiellement de 100 pce.

Plus particulièrement, de préférence, l'élastomère diénique de la composition de caoutchouc comprend majoritairement un élastomère choisi dans le groupe constitué par le caoutchouc naturel, le polyisoprène de synthèse ou un mélange de ces derniers.

De préférence, la composition de caoutchouc composition de caoutchouc comprend de 60 à 100 pce, de préférence de 70 à 100 pce, de préférence encore de 80 à 100 pce, mieux de 90 à 100 pce, d'un élastomère choisi dans le groupe constitué par le caoutchouc naturel, le polyisoprène de synthèse ou un mélange de ces derniers.

La composition de caoutchouc utilisée dans le produit renforcé comprend avantageusement une ou plusieurs charges renforçantes.

On peut utiliser tout type de charge renforçante connue pour ses capacités à renforcer une composition de caoutchouc, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les bandages pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprènique sous la forme d'un masterbatch (voir par exemple demandes WO 97/36724 ou WO 99/16600).

Comme exemples de charges organiques autres que des noirs de carbone, on peut citer les charges organiques de polyvinyle aromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃).

De préférence, la ou les charges renforçantes sont choisies parmi la silice, le noir de carbone et leur mélange, et de préférence encore la charge renforçante est du noir de carbone.

De manière préférentielle, la ou les charges renforçantes (noir de carbone et/ou charge inorganique renforçante telle que silice) sont présentes à un taux allant de 20 à 200 pce, de préférence de 30 à 150 pce, de préférence encore de 40 à 80 pce.

Selon un mode de réalisation de l'invention, on utilise une charge renforçante comportant entre 30 et 150 pce, plus préférentiellement entre 30 et 120 pce de charge organique, particulièrement du noir de carbone.

Lorsque la charge renforçante comprend une charge nécessitant l'utilisation d'un agent de couplage pour établir la liaison entre la charge et l'élastomère diénique, la composition de caoutchouc comprend en outre, de manière classique, un agent susceptible d'assurer efficacement cette liaison. Lorsque la silice est présente dans la composition de caoutchouc à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits « symétriques » répondant à la formule générale (I) suivante :

Z - A - Sx - A - Z (I)

dans laquelle :
- x est un entier de 2 à 8, de préférence de 2 à 5 ;
- A est un radical hydrocarboné divalent, de préférence des groupements alkylène en C1-C18 ou des groupements arylène en C6-C12, plus particulièrement des alkylènes en C1-C10, notamment en C1-C4, en particulier le propylène ;
- Z répond à l'une des formules ci-après : 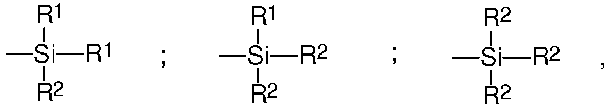
dans lesquelles :
- les radicaux R1, substitués ou non substitués, identiques ou différents entre eux, représentent un groupe alkyle en C1-C18, cycloalkyle en C5-C18 ou aryle en C6-C18, de préférence représentent des groupes alkyle en C1-C6, cyclohexyle ou phényle, notamment des groupes alkyle en C1-C4, et plus particulièrement représentent le méthyle et/ou l'éthyle,
- les radicaux R2, substitués ou non substitués, identiques ou différents entre eux, représentent un groupe alkoxyle en C1-C18 ou cycloalkoxyle en C5-C18, de préférence représentent un groupe choisi parmi alkoxyles en C1-C8 et cycloalkoxyles en C5-C8, plus préférentiellement encore représentent un groupe choisi parmi alkoxyles en C1-C4, et en particulier représentent un groupe méthoxyle et éthoxyle.

Dans le cas d'un mélange d'alkoxysilanes polysulfurés répondant à la formule (I) ci-dessus, notamment des mélanges usuels disponibles commercialement, la valeur moyenne des « x » est un nombre fractionnaire de préférence allant de 2 à 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bismonoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R2 = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azodicarbonyle, tels que décrits par exemple dans les demandes de brevet WO 2006/125532, WO 2006/125533 et WO 2006/125534.

Dans la composition de caoutchouc utilisée dans le produit renforcé selon l'invention, la teneur en agent de couplage varie préférentiellement de 0,5 à 12 pce, étant entendu qu'il est en général souhaitable d'en utiliser le moins possible. La présence de l'agent de couplage dépend de celle de la charge inorganique renforçante autre que du noir de carbone. Son taux est aisément ajusté par l'homme du métier selon le taux de cette charge ; il est typiquement de l'ordre de 0,5 à 15 % en poids par rapport à la quantité de charge inorganique renforçante autre que du noir de carbone.

L'homme du métier comprendra qu'à titre de charge équivalente de la charge inorganique renforçante autre que noir de carbone, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et les élastomères diéniques.

La composition utilisée dans le produit renforcé selon l'invention comprend avantageusement un système de réticulation.

Le système de réticulation peut être un système de vulcanisation. Dans ce cas, il est préférentiellement à base de soufre ou à base d'un donneur de soufre et d'un accélérateur primaire de vulcanisation.

Parmi les donneurs de soufre on peut citer par exemple les alkyl phénol disulfures (APDS) tel que par exemple le disulfure de para-tertiobutylphénol.

Le soufre est utilisé à un taux préférentiel allant de 0,5 à 10 pce, plus préférentiellement allant de 0,5 à 5 pce, en particulier de 0,5 à 3 pce.

On peut utiliser comme accélérateur primaire tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

A ce système de vulcanisation de base peuvent venir s'ajouter divers accélérateurs secondaires ou activateurs de vulcanisation connus tels qu'oxyde de zinc, acide stéarique ou composés équivalents, dérivés guanidiques (en particulier diphénylguanidine).

La teneur de chaque accélérateur primaire ou secondaire de vulcanisation et de chaque activateur de vulcanisation varie généralement de 0,5 à 5,0 pce.

La composition de caoutchouc du produit renforcé selon l'invention comporte optionnellement également tout ou partie des additifs usuels habituellement utilisés dans les compositions d'élastomères destinées notamment à la fabrication de bandages pneumatiques, comme par exemple des pigments, des agents de protection tels que cires anti-ozone, anti-ozonants chimiques, antioxydants, des agents plastifiants tels que les huiles plastifiantes ou les résines hydrocarbonées bien connues de l'homme de l'art, des résines renforçantes, des accepteurs (par exemple résine phénolique novolaque) ou des donneurs de méthylène (par exemple HMT ou H3M).

Usuellement, les compositions de caoutchouc comprennent également un promoteur d'adhésion, par exemple un sel de cobalt. En effet, la composition est utilisée pour la fabrication de produits semifinis destinés à être au contact d'un ou plusieurs éléments de renfort métallique, par exemple des câbles métalliques. Le sel de cobalt permet une adhésion durable de la composition aux câbles métalliques, notamment à leur revêtement comprenant par exemple du laiton. Toutefois, de tels sels de cobalt sont relativement chers. De plus, on souhaite autant que possible limiter la quantité à employer de ces sels pour réduire leur impact environnemental. Dans la composition de caoutchouc du produit renforcé de l'invention, on n'utilise de préférence aucun sel de cobalt et de préférence aucun promoteur d'adhésion.

Il va de soi que l'invention concerne les produits renforcés dont la composition de caoutchouc est à l'état dit "cru" ou non réticulé (i.e., avant cuisson) ou à l'état dit "cuit" ou réticulé, ou encore vulcanisé (i.e., après réticulation ou vulcanisation).

Les compositions de caoutchouc sont fabriquées dans des mélangeurs appropriés, en utilisant par exemple deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de vulcanisation.

Un procédé utilisable pour la fabrication de telles compositions de caoutchouc comporte par exemple et de préférence les étapes suivantes :
- dans un mélangeur, incorporer à l'élastomère diénique ou auxdits élastomères diéniques la charge renforçante et les éventuels autres ingrédients de la composition à l'exception du système de réticulation, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite le système de réticulation ;
- malaxer le tout jusqu'à une température maximale inférieure à 120°C ;
- extruder ou calandrer la composition de caoutchouc ainsi obtenue.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en œuvre complémentaires et autres additifs divers, à l'exception du système de réticulation. Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore calandrée ou extrudée sous la forme d'une feuille ou d'un profilé de caoutchouc utilisable directement comme gomme d'enrobage d'un renfort gainé, c'est-à-dire d'un (ou plusieurs) fil(s) de renforcement, textile(s) ou métallique(s) ledit ou lesdits fils étant recouverts dans une gaine, comme décrit précédemment.

La réticulation, de préférence la vulcanisation (ou cuisson), est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

La figure 1 annexée représente un bandage pneumatique conforme à un premier mode de réalisation de l'invention et désigné par la référence générale 10. Le bandage pneumatique 10 est sensiblement de révolution autour d'un axe sensiblement parallèle à la direction axiale du bandage pneumatique. Le bandage pneumatique 10 est ici destiné à un véhicule de tourisme ou un véhicule poids lourd tel qu'un camion.

Le plan médian M du bandage pneumatique est le plan qui est normal à l'axe de rotation du bandage pneumatique et qui se situe à équidistance des structures annulaires de renfort de chaque bourrelet.

La direction circonférentielle est la direction qui est perpendiculaire à la fois à un rayon du bandage pneumatique et à la direction axiale.

Le bandage pneumatique 10 comporte un sommet 12 comprenant une armature de sommet 14 comprenant une armature de travail 15 comprenant deux nappes de travail 16, 18 et une armature 17 de frettage comprenant une nappe de frettage 19. L'armature de sommet 14 est surmontée d'une bande de roulement 20. L'armature de frettage 17, ici la nappe de frettage 19, est radialement intercalée entre l'armature de travail 15 et la bande de roulement 20.

Deux flancs 22 prolongent le sommet 12 radialement vers l'intérieur. Le bandage pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est radialement intercalée entre l'armature de carcasse 32 et la bande de roulement 20. Chaque flanc 22 relie chaque bourrelet 24 au sommet 14.

L'armature de carcasse 32 comporte de préférence une seule nappe de carcasse 34 d'éléments de renfort textiles radiaux. L'armature de carcasse 32 est ancrée à chacun des bourrelets 24 par un retournement autour de la tringle 28 de manière à former dans chaque bourrelet 24 un brin aller 38 s'étendant depuis les bourrelets 24 à travers les flancs 22 jusque dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12.

Chaque nappe de travail 16, 18 forme un produit renforcé 21 selon l'invention comprenant des éléments de renfort 44 formant un angle allant de 15° et 40°, de préférence allant de 20° à 30° et ici égal à 26° avec la direction circonférentielle du bandage pneumatique 10. Les éléments de renfort 44 sont croisés d'une nappe de travail par rapport à l'autre. A ce titre, chaque nappe de travail 16, 18 comprend une composition de gainage spécifique de l'invention, c'est-à-dire une composition telle que définie ci-avant et ci-après pour les besoins de l'invention.

La nappe de frettage 19 comprend des éléments de renfort textiles de frettage formant un angle au plus égal à 10°, de préférence allant de 5° à 10° avec la direction circonférentielle du bandage pneumatique 10. En l'espèce, les éléments de renfort textiles de frettage sont des retors réalisés dans un matériau thermorétractile, ici en polyamide 66, chaque retors consistant en deux filés de 140 tex qui ont été retordus ensemble (sur câbleuse directe) à 250 tours/mètre, dont le diamètre est égal à environ 0,66 mm. La contraction thermique CT de chaque élément de renfort textile de frettage est égale à environ 7%.

Les nappes de travail 16, 18, de frettage 19 et de carcasse 34 comprennent une matrice d'élastomère dans laquelle sont noyés les éléments de renfort de la nappe correspondante. Les compositions de caoutchouc des matrices d'élastomère des nappes de travail 16, 18, de frettage 19 et de carcasse 34 peuvent être des compositions conventionnelles pour le calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs.

Les figures 2 à 5 représentent divers modes de réalisation de l'invention, c'est-à-dire divers agencements de produits renforcés 21 selon l'invention. Les éléments de renfort 44 du produit renforcé 21 sont agencés côte à côte selon une direction principale. Les éléments de renfort 44 s'étendent parallèlement les uns aux autres. Chaque élément de renfort 44 comprend au moins un fil de renforcement 46. Chaque élément de renfort 44 comprend également au moins une gaine 48 revêtant le fil de renforcement 46 et comprenant au moins une couche 50 d'une composition du copolymère à blocs. Le renfort gainé 44 est noyé dans une composition de caoutchouc 23.

La gaine 48 comprend une unique couche 50 de la composition de copolymère à blocs.

Chaque produit renforcé des figures 2 à 5 comprend trois éléments de renfort gainés 44 noyés ensemble dans la composition de caoutchouc 23.

La différence entre les modes de réalisations présentés dans les figures 2 à 5 réside dans l'arrangement et le nombre des fils de renforcement 46 dans la gaine pour former l'élément de renfort gainé 44, ici l'élément de renfort métallique gainé, utile au produit renforcé 21 de l'invention.

Ainsi, sur la figure 2, chaque élément de renfort gainé 44 comprend un fil de renforcement 46 comprenant un unique monofilament, ici métallique, individuellement recouvert d'une gaine 48;

Sur la figure 3, chaque élément de renfort gainé 44 comprend un fil de renforcement 46 comprenant trois monofilaments, ici métalliques, câblés ensemble, chaque fil de renforcement 46 étant individuellement recouvert d'une gaine 48;

Sur la figure 4, chaque élément de renfort gainé 44 forme une bandelette comprenant trois fils de renforcement 46 recouverts collectivement d'une même gaine 48;

Sur la figure 5, chaque élément de renfort gainé 44 forme une bandelette de trois fils de renforcement 46, chaque fil de renforcement 46 comprenant trois monofilaments, ici métalliques, câblés ensemble Les trois fils de renforcement 46 sont recouverts collectivement d'une même gaine 48.

Le produit renforcé de l'invention précédemment décrit est notamment utilisable pour la fabrication de tout article fini ou produit semi-fini en caoutchouc, en particulier pour le renforcement de bandages pneumatiques ou non pneumatiques de tous types de véhicules, en particulier véhicules tourisme ou véhicules industriels tels que Poids-lourd.

Comme déjà indiqué précédemment, ce produit renforcé de l'invention peut se présenter sous des formes variées, sous une forme unitaire (avec un seul fil de renforcement) ou encore sous la forme d'une nappe, bande, bandelette ou d'un bloc de caoutchouc dans lesquels sont incorporés, par exemple par calandrage, plusieurs fils de renforcement textile(s) et/ou métallique(s). L'adhésion définitive entre le renfort filaire gainé et la gomme d'enrobage peut être obtenue à l'issue de la cuisson, de préférence sous pression, de l'article fini auquel est destiné le renfort filaire.

L'invention a donc également pour objet un bandage comprenant un produit renforcé selon l'invention. Par bandage, on entend un objet de forme générale toroïdale. Plus précisément, on entend une structure de révolution autour d'un axe principal, cette structure définissant une surface fermée.

Selon un mode de réalisation, le bandage est pneumatique et destiné à délimiter au moins en partie une cavité soumise à une pression de gonflage d'un gaz.

Selon un autre mode de réalisation, le bandage est non pneumatique et destiné à former une bande portée par un support.

De préférence, le bandage est un bandage pour véhicule et plus préférentiellement un bandage pneumatique pour véhicule.

Les exemples suivants servent à illustrer l'invention sans toutefois présenter un caractère limitatif.

### EXEMPLES

### I. Synthèse des copolymères à blocs

### 1/Synthèse du copolymère : Ref 1 (comparatif)

Le mélange de polybutadiène et de dimère d'acide gras en un rapport molaire de ½ (polybutadiène/dimère d'acide gras) est effectué.

Puis, le mélange obtenu est mélangé au polyamide comme décrit ci-dessous.

### • Fabrication de PA 11 diamine de masse moléculaire en nombre 5000 g/mol :

Dans un autoclave de 100L muni d'un agitateur type Paravisc, sont introduits 33 kg d'acide 11-aminoundecanoïque, 0.716 kg d'hexaméthylène diamine, 33g d'Irganox 1098, 23,3g d'acide orthophosphorique 85% et 5kg d'eau déionisée. Le milieu est inerté à l'azote puis chauffé jusqu'à 240°C matière sous agitation. La pression est alors de 24 bars. Lorsque cette température est atteinte, la pression est ramenée à pression atmosphérique par détente et un balayage sous azote est appliqué pendant 90 minutes.

Le produit obtenu est ainsi vidangé dans l'eau et récupéré sous forme d'écailles.

Les fins de chaîne sont dosées par potentiométrie :
NH₂ = 0.368 meq/g

La Masse moléculaire est 5434 g/mol.

### • Fabrication d'un Pentabloc :

Dans un autoclave de 100L muni d'un agitateur type Paravisc, sont introduits 3.786kg de Krasol® LBH-P 2000 (viscosité 13000 cP, Mn = 2100, 1.8 mol), 2.026kg de Pripol® 1013 (M=575 g/mol, 3.6 mol), et 6.85g d'acide orthophosphorique 85%. Le milieu est agité et est porté à une température de 220°C sous 200mbars pendant 2h. Le milieu est ramené à pression atmosphérique et refroidi. 19.14kg 3.6mol) du polyamide préparé précédemment sont ajoutés. Le milieu est chauffé à 235°C sous balayage azote et agitation. Puis un vide de 200mbars est appliqué pendant 2h Le produit est ensuite vidangé dans l'eau et granulé.

Le dosage potentiométrique des fins de chaine :
NH₂ = 0.132 meq/g
COOH = 0.013 meq/g, soit Mn = 13800 g/mol

La viscosité à l'état fondu est également mesurée par rhéologie oscillatoire à 288 Pa.s à 230°C/1Hz

### Dosage potentiométrique des fins de chaine aminés :

500 mg de polymère sont dissouts dans 80g de m-crésol à130°C pendant 1h.

De l'acide perchlorique 0.02N (dans l'acide acétique) est ajouté jusqu'à neutralisation des fins de chaine amines. Cette neutralisation s'accompagne par une modification de potentiel, suivi à l'aide d'électrodes.

### Dosage potentiométrique des fins de chaine acide :

1g de polymère est dissout dans 80g de ter-butylphénol à 130°C pendant 1h.

De l'hydroxyde de tétra-n-butylammonium 0.02N est ajouté jusqu'à neutralisation des fins de chaine acide. Cette neutralisation s'accompagne par une modification de potentiel, suivi à l'aide d'électrodes.

### Calcul de la masse moléculaire :

La masse moléculaire est calculée selon la formule ci-dessous :
Mn = 2/([COOH]+[NH2])

Avec [COOH] et [NH2] signifiant les concentrations en fins de chaine amine et acide telles que définies ci-dessus.

### Mesure de la viscosité :

La méthode utilisée est celle décrite dans la description ci-dessus, selon la norme ISO 6721-10 : 1999.

Plan plan : 30 mn à 230°C, 5% de déformation selon les conditions opératoires suivantes :
Appareil : PHYSICA MCR301
Géométrie : plans parallèles de 25mm de diamètre
Températures : 230°C
Fréquence : 100 à 0.01Hz
Durée : 10minutes
Atmosphère : Balayage d'azote.

### 2/Svnthèse du copolymère selon l'invention A

Le procédé de préparation du copolymère à blocs selon l'invention A est identique à celui du polymère Ref 1, à l'exception du polyamide PA11 qui présente une masse moléculaire 10 300 g/mol.

Les proportions sont les suivantes :
- Pour le PA11 terminé diamine :

| | |
|---|---|
| Acide 11-aminoundécanoïque | 33.000 kg |
| Héxaméthylènediamine | 0.353 kg |
| Eau | 5.000 kg |
| IRGANOX | 33.000 g |
| H3PO4 85% | 23.300 g |

- Pour le copolymère à blocs :
Krasol LBH-P2000 : 1.84 kg
Pripol 1013 : 0.985 kg
PA : 16.70 kg

Les fins de chaines dosées :
Pour le PA 11 :
NH2 = 0.193 meq/g, soit Mn = 10 300g/mol

Pour le copolymère à blocs :
NH2 = 0.090 meq/g
COOH = 0.028 meq/g
Soit Mn = 16 950g/mol

La viscosité à l'état fondu est également mesurée par rhéologie oscillatoire à 1 310 Pa.s à 230°C/1Hz.

### 3/Synthèse du copolymère selon l'invention B

Le polymère Ref1 est ajouté dans une extrudeuse bi-vis co-rotative RHEOMEX PTW 16/25p équipée d'une filière 1 trou de diamètre 3mm avec 0.25% massique de dianhydride 3,3',4,4'-benzophénonetétracarboxylique. La vitesse de vis est de 400 rpm, le débit de 2,5 kg/h et un couple moyen de 30% et les fourreaux sont chauffés à une consigne de 230°C. En sortie de filière, le polymère est refroidi dans un bac à eau à 23°C puis granulé.

Les fins de chaine du polymère sont ensuite dosées par potentiométrie :
COOH = 0.024 meq/g
NH2 = 0.104 meq/g
Mn = 15 625 g/mol

La viscosité à l'état fondu est également mesurée par rhéologie oscillatoire à 1080 Pa.s à 230°C/1Hz.

**Tableau 1**

| Copolymères testés | Viscosité à l'état fondu (Pa.s) |
|---|---|
| Ref 1 | 288 |
| A | 1310 |
| B | 1080 |

### II. Préparation de la pièce extrudée/enduite

Le recouvrement d'un fil de renforcement de diamètre proche de 0,35 mm, par exemple d'un câble métallique constitué simplement de trois monofils élémentaires de diamètre 0,18 mm torsadés ensemble, par une première couche de copolymère à blocs d'épaisseur maximale égale à environ 0,25 mm au diamètre, pour l'obtention d'un fil de renforcement gainé ayant un diamètre total d'environ 0,6mm, est réalisé sur une ligne d'extrusion-gainage comportant deux filières, une première filière (contre-filière ou filière amont) de diamètre égal à environ 0,41 mm et une seconde filière (ou filière aval) de diamètre égal à environ 0,53 mm, disposées toutes deux dans une tête d'extrusion portée à environ 210°C.

Le copolymère à blocs, fondu à une température de 210°C à 230°C selon les zones de chauffe de la vis d'extrusion (Z1=210°C, Z2 = 220°C, Z3=230°C, Collier = 220°C) dans l'extrudeuse, recouvre ainsi le fil de renforcement, par le biais de la tête de gainage, à une vitesse de défilement du fil égale typiquement à plusieurs dizaines de m/min, pour un débit de pompe d'extrusion typiquement de plusieurs dizaines de cm3/min. En sortie de ce gainage, le fil est immergé dans un bac de refroidissement rempli d'eau froide, pour solidifier et figer le polyamide dans son état amorphe, puis séché par exemple par passage de la bobine de réception à l'étuve.

### III. Tests et résultats

### Description du test d'adhésion :

La qualité de la liaison entre le caoutchouc et les éléments de renfort gainés précédemment fabriqués est ensuite appréciée par un test dans lequel on mesure la force nécessaire pour extraire les éléments de renfort gainés d'une composition de caoutchouc vulcanisée, dit encore vulcanisat. Cette composition de caoutchouc est une composition conventionnelle utilisée pour le calandrage de nappes métalliques de ceinture de bandage pneumatique, à base de caoutchouc naturel, de noir de carbone et des additifs usuels.

Composition de caoutchouc utilisée :La composition de caoutchouc comprend 100 pce de caoutchouc naturel, 70 pce de noir de carbone série 300, 1,5 pce de N-1, 3-diméthylbutyl-N-phényl-para-phénylènediamine, 1 pce d'un sel de cobalt, 0,9 pce d'acide stéarique, 6 pce de soufre insoluble moléculaire, 0,8 pce de N-tertiarybutyl-2-benzothiazole sulfamide et 7,5 pce de ZnO.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les éléments de renforts gainés (15 brins au total) sont emprisonnés entre les deux plaques de caoutchouc à l'état cru, à égale distance et en laissant dépasser de part et d'autre de ces plaques une extrémité d'élément de renfort gainés de longueur suffisante pour la traction ultérieure. Le bloc comportant les éléments de renfort est alors placé dans un moule adapté puis cuit sous pression. La cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque élément de renfort gainé isolément hors du caoutchouc, à une vitesse et une température données : à 50 mm/min et 20°C.

On caractérise les niveaux d'adhésion en mesurant la force dite d'arrachage (notée Fmax) pour arracher les éléments de renforts de l'éprouvette (moyenne sur 15 tractions).

### 1/Traction à 23°C

**Tableau 2**

| | Fmoy (N/mm²) | Fmax (N/mm²) |
|---|---|---|
| Ref 1 | 14,2 | 15,6 |
| A | 18,9 | 20,2 |
| B | 20,0 | 23,3 |

### 2/Traction à 100°C

**Tableau 3**

| | Fmoy (N/mm²) | Fmax (N/mm²) |
|---|---|---|
| Ref 1 | 5,8 | 6,6 |

### 3/Traction à 120°C

**Tableau 4**

| | Fmoy (N/mm²) | Fmax (N/mm²) |
|---|---|---|
| A | 7,5 | 8,2 |
| B | 7,6 | 8,4 |

### IV. Conclusion

Ces résultats montrent que le produit renforcé incorporant le copolymère à bloc selon l'invention permet d'obtenir une adhésion, que ce soit à température ambiante ou à température plus élevée, améliorée par rapport au produit renforcé incorporant un copolymère à blocs ne présentant la viscosité spécifique revendiquée

## Revendications

1. Produit renforcé comportant un ou plusieurs fils de renforcement, le ou lesdits fils étant recouverts individuellement ou collectivement d'une gaine comprenant une composition de gainage comprenant un ou plusieurs copolymères thermoplastiques à blocs comprenant au moins un bloc polyamide, au moins un bloc polyoléfine, au moins un bloc alkylène, et présentant une viscosité à l'état fondu allant de 300 Pa.s à 20 000 Pa.s, en particulier de 300 à 15 000 Pa.s, mesurée à 230°C par rhéologie oscillatoire, le ou les fils gainés étant eux-mêmes noyés dans une composition de caoutchouc.

2. Produit renforcé selon la revendication 1, **caractérisé en ce que** le ou les blocs polyamide sont aliphatiques.

3. Produit renforcé selon la revendication 1 ou 2, **caractérisé en ce que** le ou les blocs polyamide présentent chacun une masse moléculaire en nombre mesurée par potentiométrie comprise entre 4000 et 20 000 g/mol.

4. Produit renforcé selon l'une quelconque des revendications précédentes, **caractérisé en ce que** le ou les blocs polyamide comprennent au moins un motif choisi parmi PA 6, PA 11, PA12, PA 6.10, PA 6.6, PA 6.12, PA 10.10, PA 10.12.

5. Produit renforcé selon l'une quelconque des revendications précédentes, **caractérisé en ce que** le ou les blocs polyoléfine présentent chacun une viscosité inférieure à 60 000 cps, de préférence inférieure à 40 000 cps, et de préférence inférieure à 20 000 cps, et de façon encore préférentielle entre 1 000 et 20 000 cps, la viscosité étant mesurée à 25°C avec un appareil de Brookfield et selon la méthode Brookfield.

6. Produit renforcé selon l'une quelconque des revendications précédentes, **caractérisée en ce que** le ou les blocs polyoléfine sont du polybutadiène.

7. Produit renforcé selon l'une quelconque des revendications précédentes, **caractérisé en ce que** le ou les blocs alkylène sont des dimères d'acide gras, de préférence des diacides en C₈-C₃₆.

8. Produit renforcé selon l'une quelconque des revendications précédentes, **caractérisé en ce que** copolymère à blocs est de formule suivante :
PA-(R-Pol-R-PA)n-R-Pol-R-PA
avec n compris entre 0 et 100, en particulier de 0 à 10, de préférence 0 ou 1,
PA désignant le bloc polyamide,
R désignant le bloc alkylène,
Pol désignant le bloc polyoléfine.

9. Produit renforcé selon l'une quelconque des revendications précédentes, **caractérisé en ce que**
- la teneur en bloc polyamide est comprise entre 2 et 98% en poids par rapport au poids total du copolymère à blocs,
- la teneur en bloc polyoléfine est comprise entre 2 et 98% en poids par rapport au poids total du copolymère à blocs, et
- la teneur en bloc alkylène est comprise entre 0,1 et 25%, de préférence entre 1 et 15% en poids par rapport au poids total du copolymère à blocs,
**la somme étant égale à 100%.**

10. Produit renforcé selon l'une quelconque des revendications précédentes, **caractérisé en ce que** le copolymère à blocs comprend au moins un bloc allongeur de chaîne.

11. Produit renforcé selon la revendication 10, **caractérisé en ce que** l'allongeur de chaîne est le dianhydride 3,3',4,4'-benzophénone tétracarboxylique

12. Produit renforcé selon l'une quelconque des revendications précédentes **caractérisé en ce que** la composition de caoutchouc comprend une charge renforçante.

13. Produit renforcé selon l'une quelconque des revendications précédentes **caractérisé en ce que** la composition de caoutchouc comprend un système de réticulation.

14. Produit renforcé selon la revendication précédente **caractérisé en ce que** le ou les fils de renforcement sont métallique(s).

15. Bandage comprenant un produit renforcé tel que défini à l'une quelconque des revendications précédentes.

## Patentansprüche

1. Verstärktes Produkt, umfassend einen oder mehrere Verstärkungsfäden, wobei der Faden bzw. die Fäden einzeln oder zusammen mit einer Umhüllung bedeckt sind, welche eine Umhüllungszusammensetzung umfasst, welche ein oder mehrere thermoplastische Blockcopolymere mit mindestens einem Polyamidblock, mindestens einem Polyolefinblock und mindestens einem Alkylenblock und mit einer bei 230 °C durch Schwingungsrheologie gemessenen Schmelzeviskosität im Bereich von 300 Pa.s bis 20.000 Pa.s, insbesondere von 300 bis 15.000 Pa.s, umfasst, wobei der umhüllte Faden bzw. die umhüllten Fäden selbst in einer Kautschukzusammensetzung eingebettet sind.

2. Verstärktes Produkt nach Anspruch 1, **dadurch gekennzeichnet, dass** der Polyamidblock bzw. die Polyamidblöcke aliphatisch ist bzw. sind.

3. Verstärktes Produkt nach Anspruch 1 oder 2, **dadurch gekennzeichnet, dass** der Polyamidblock bzw. die Polyamidblöcke jeweils eine durch Potentiometrie gemessene zahlenmittlere Molmasse zwischen 4000 und 20.000 g/mol aufweist bzw. aufweisen.

4. Verstärktes Produkt nach einem der vorhergehenden Ansprüche, **dadurch gekennzeichnet, dass** der Polyamidblock bzw. die Polyamidblöcke mindestens eine Einheit, die aus PA 6, PA 11, PA 12, PA 6.10, PA 6.6, PA 6.12, PA 10.10 und PA 10.12 ausgewählt ist, umfasst bzw. umfassen.

5. Verstärktes Produkt nach einem der vorhergehenden Ansprüche, **dadurch gekennzeichnet, dass** der Polyolefinblock bzw. die Polyolefinblöcke jeweils eine Viskosität von weniger als 60.000 cPs, vorzugsweise weniger als 40.000 cPs und vorzugsweise weniger als 20.000 cPs und noch weiter bevorzugt zwischen 1000 und 20.000 cPs aufweist bzw. aufweisen, wobei die Viskosität bei 25 °C mit einer Brookfield-Apparatur und nach der Brookfield-Methode gemessen wird.

6. Verstärktes Produkt nach einem der vorhergehenden Ansprüche, **dadurch gekennzeichnet, dass** es sich bei dem Polyolefinblock bzw. den Polyolefinblöcken um Polybutadien handelt.

7. Verstärktes Produkt nach einem der vorhergehenden Ansprüche, **dadurch gekennzeichnet, dass** es sich bei dem Alkylenblock bzw. den Alkylenblöcken um Fettsäuredimere, vorzugsweise C₈-C₃₆-Disäuren, handelt.

8. Verstärktes Produkt nach einem der vorhergehenden Ansprüche, **dadurch gekennzeichnet, dass** das Blockcopolymer bzw. die Blockcopolymere die folgende Formel aufweist bzw. aufweisen:
PA-(R-Pol-R-PA)n-R-Pol-R-PA
wobei n zwischen 0 und 100 liegt und insbesondere einen Wert von 0 bis 10, vorzugsweise 0 oder 1, hat,
PA für den Polyamidblock steht,
R für den Alkylenblock steht,
Pol für den Polyolefinblock steht.

9. Verstärktes Produkt nach einem der vorhergehenden Ansprüche, **dadurch gekennzeichnet, dass**
- der Polyamidblock-Gehalt zwischen 2 und 98 Gew.-%, bezogen auf das Gesamtgewicht des Blockcopolymers, liegt,
- der Polyolefinblock-Gehalt zwischen 2 und 98 Gew.-%, bezogen auf das Gesamtgewicht des Blockcopolymers, liegt und
- der Alkylenblock-Gehalt zwischen 0,1 und 25 Gew.-%, vorzugsweise zwischen 1 und 15 Gew.-%, bezogen auf das Gesamtgewicht des Blockcopolymers, liegt,
wobei sich die Summe auf 100 % beläuft.

10. Verstärktes Produkt nach einem der vorhergehenden Ansprüche, **dadurch gekennzeichnet, dass** das Blockcopolymer bzw. die Blockcopolymere mindestens einen kettenverlängernden Block umfasst bzw. umfassen.

11. Verstärktes Produkt nach Anspruch 10, **dadurch gekennzeichnet, dass** es sich bei dem Kettenverlängerungsmittel um 3,3',4,4'-Benzophenontetracarbonsäuredianhydrid handelt.

12. Verstärktes Produkt nach einem der vorhergehenden Ansprüche, **dadurch gekennzeichnet, dass** die Kautschukzusammensetzung einen verstärkenden Füllstoff umfasst.

13. Verstärktes Produkt nach einem der vorhergehenden Ansprüche, **dadurch gekennzeichnet, dass** die Kautschukzusammensetzung ein Vernetzungssystem umfasst.

14. Verstärktes Produkt nach einem der vorhergehenden Ansprüche, **dadurch gekennzeichnet, dass** der Verstärkungsfaden bzw. die Verstärkungsfäden aus Metall ist bzw. sind.

15. Reifen, umfassend ein verstärktes Produkt gemäß einem der vorhergehenden Ansprüche.

## Claims

1. Reinforced product comprising one or more reinforcing threads, the said thread or threads being covered individually or collectively with a sheath comprising a sheathing composition comprising one or more thermoplastic block copolymers comprising at least one polyamide block, at least one polyolefin block, at least one alkylene block, and exhibiting a melt viscosity ranging from 300 Pa.s to 20 000 Pa.s, in particular from 300 to 15 000 Pa.s, measured at 230°C by oscillatory rheology, the sheathed thread or threads being themselves embedded in a rubber composition.

2. Reinforced product according to Claim 1, **characterized in that** the polyamide block or blocks are aliphatic.

3. Reinforced product according to Claim 1 or 2, **characterized in that** the polyamide block or blocks each exhibit a number-average molecular weight, measured by potentiometry, of between 4000 and 20 000 g/mol.

4. Reinforced product according to any one of the preceding claims, **characterized in that** the polyamide block or blocks comprise at least one unit chosen from PA 6, PA 11, PA 12, PA 6.10, PA 6.6, PA 6.12, PA 10.10 and PA 10.12.

5. Reinforced product according to any one of the preceding claims, **characterized in that** the polyolefin block or blocks each exhibit a viscosity of less than 60 000 cPs, preferably of less than 40 000 cPs and preferably of less than 20 000 cPs, and more preferably between 1000 and 20 000 cPs, the viscosity being measured at 25°C with a Brookfield device and according to the Brookfield method.

6. Reinforced product according to any one of the preceding claims, **characterized in that** the polyolefin block or blocks are polybutadiene.

7. Reinforced product according to any one of the preceding claims, **characterized in that** the alkylene block or blocks are fatty acid dimers, preferably C₈-C₃₆ diacids.

8. Reinforced product according to any one of the preceding claims, **characterized in that** block copolymer has the following formula:
PA-(R-Pol-R-PA)ₙ-R-Pol-R-PA
with n between 0 and 100, in particular from 0 to 10, preferably 0 or 1,
PA denoting the polyamide block,
R denoting the alkylene block,
Pol denoting the polyolefin block.

9. Reinforced product according to any one of the preceding claims, **characterized in that**:
- the content of polyamide block is between 2% and 98% by weight, with respect to the total weight of the block copolymer,
- the content of polyolefin block is between 2% and 98% by weight, with respect to the total weight of the block copolymer, and
- the content of alkylene block is between 0.1% and 25%, preferably between 1% and 15%, by weight, with respect to the total weight of the block copolymer, the sum being equal to 100.

10. Reinforced product according to any one of the preceding claims, **characterized in that** the block copolymer comprises at least one chain-extending block.

11. Reinforced product according to Claim 10, **characterized in that** the chain extender is 3,3',4,4'-benzophenonetetracarboxylic dianhydride.

12. Reinforced product according to any one of the preceding claims, **characterized in that** the rubber composition comprises a reinforcing filler.

13. Reinforced product according to any one of the preceding claims, **characterized in that** the rubber composition comprises a crosslinking system.

14. Reinforced product according to the preceding claim, **characterized in that** the reinforcing thread or threads are metallic.

15. Tyre comprising a reinforced product as defined in any one of the preceding claims.
